# EUROPÄISCHE PATENTSCHRIFT

(11) **EP 3 880 911 B1**
(45) Veröffentlichungstag und Bekanntmachung des Hinweises auf die Patenterteilung: **17.07.2024**
(21) Anmeldenummer: 19765655.6
(22) Anmeldetag: 02.08.2019
(51) Int. Cl.: E05B 79/12, E05B 79/22, E05B 81/80, E05B 81/90

(54) **KRAFTFAHRZEUG-SCHLIESSSYSTEM**
VEHICLE LOCK SYSTEM
SYSTÈME DE VERROUILLAGE D'UN VÉHICULE AUTOMOBILE

(30) Priorität: 16.11.2018 DE 102018128854
(43) Veröffentlichungstag der Anmeldung: 22.09.2021
(73) Patentinhaber: Huf Hülsbeck & Fürst GmbH & Co. KG, 42551 Velbert (DE)
(72) Erfinder: GORENZWEIG, Igor, 42109 Wuppertal (DE); MÖNIG, Stefan, 58332 Schwelm (DE)
(86) Internationale Anmeldenummer: PCT/EP2019/070936
(87) Internationale Veröffentlichungsnummer: WO 2020/098986

(56) Entgegenhaltungen:
- DE-A1- 102006 003 023
- DE-A1- 102016 103 918
- DE-A1- 102016 109 566
- DE-U1- 202008 003 845
- DE-U1- 202016 100 521

## Beschreibung

Die Erfindung geht aus von einem Kraftfahrzeug-Schließsystem für eine Kraftfahrzeugtür oder Klappe mit den im Oberbegriff des Anspruchs 1 angegebenen Merkmalen.

Kraftfahrzeug-Schließsystem für eine Kraftfahrzeugtür oder Klappe der eingangs bezeichneten Art ist beispielsweise bekannt, welches ein Kraftfahrzeugschloss mit einem Schlossgehäuse aufweist, in welchem ein Gesperre und Entriegelungsmechanismus bzw. Verriegelungsmechanismus zur Freigabe bzw. Blockieren des Gesperres z. B durch einen Elektromotor angeordnet ist, wobei das Freigeben bzw., Blockieren des Gesperres nur dann erfolgt, wenn sich ein berechtigter Benutzer vorher beim Hauptsteuergerät authentifiziert hat. Die Authentifizierung erfolgt durch ein Code-Austausch zwischen dem Hauptsteuergerät und einem elektronischen Schlüssel, welcher mit dem Benutzer getragen wird. Das Gesperre umfasst eine drehbar gelagerte Drehfalle zum Schließen bzw. Öffnen einer Kraftfahrzeugtür oder Klappe und eine zur Betätigung der Drehfalle vorgesehene Sperrklinke, welche mit dem Entriegelungsmechanismus bzw. Verriegelungsmechanismus zusammenwirkt.

Bei einer solchen bekannten Kraftfahrzeug-Schließeinrichtung können verschiedene Notfälle eintreten, die ein wie vorstehend beschriebenes Zugangs-Szenario nicht möglich machen. Beispielsweise kann das Hauptsteuergerät aufgrund einer leeren Kraftfahrzeugbatterie nicht mehr mit dem elektronischen Schlüssel kommunizieren, um eine Legitimationsprüfung für den Zugang durchzuführen. Umgekehrt ist es auch denkbar, dass die Batterie des elektronischen Schlüssels leer ist, so dass dieser nicht mehr mit dem Kraftfahrzeug-Hauptsteuergerät zur Legitimationsprüfung kommunizieren kann.

Im Stand der Technik ist es daher bekannt, dass das Kraftfahrzeug-Schließsystem einen sogenannten mechanischen Not-Schließzylinder aufweist. Ein solcher mechanischer Not-Schließzylinder wirkt mit einem mechanischen Not-Schlüssel zusammen, um das Kraftfahrzeug-Schließsystem manuell zu entriegeln bzw. in den Entriegelungszustand zu überführen, indem der mechanische Not-Schlüssel auf bekannte Weise in den mechanischen Not-Schließzylinder eingeführt und zur Entriegelung gedreht wird. Beim entriegelten Gesperre kann dann die Kraftfahrzeugtür oder Klappe mittels eines Türaussengriffes, welcher mit dem Kraftfahrzeugschloss zusammenwirkt, geöffnet werden.

Solche Schlösser weisen eine nicht ausreichende Diebstahlsicherung aufgrund des mechanischen Not-Schlüssels und des mechanischen Not-Schließzylinders auf, wobei auch die Handhabung in einem Notfall nicht sehr komfortabel ist.

Ein weiterer Nachteil ist bei derartigen Kraftfahrzeugschlössern, dass der mechanische Schlüssel die Gefahr eines Verlustes in sich birgt, denn die Beschaffung eines mechanischen Ersatzschlüssels ist kosten- und zeitintensiv und damit sehr aufwendig.

Auch sind im Stand der Technik Notentriegelungsvorrichtungen bekannt, bei welchen versucht wird die Energie von außerhalb des Kraftfahrzeuges zuzuführen, um die Hauptsteuereinheit mit Strom zu versorgen. Dadurch ist es möglich, dass ein Benutzer sich beim Hauptsteuergerät mit einem mobilen Identifikationsgeber authentifizieren kann, um die Kraftfahrzeugschlösser durch das Hauptsteuergerät anzusteuern und zu entriegeln. Diese Vorgehensweise bewirkt, dass das ganze Fahrzeug geweckt wird, was zu einem sehr hohen Energieaufwand führt.

Solche Kraftfahrzeug-Schließsysteme sind z.B. aus DE102016103918A1, DE102016109566A1, DE202008003845U1, DE202016100521 U1 oder DE102006003023A1 bekannt.

Der Erfindung liegt die Aufgabe zugrunde eine Lösung zu schaffen, die auf konstruktiv einfache Weise ein verbessertes und für den Benutzer komfortableres Kraftfahrzeug-Schließsystem bereitstellt, durch welches die vorstehend genannten Nachteile vermieden werden und bei welchem auf kostengünstige Weise von der Verwendung eines mechanischen Not-Schließzylinders und eines mechanischen Not-Schlüssels abgesehen werden kann, wobei das Kraftfahrzeugschließsystem darüber hinaus hinsichtlich seiner Bedienung eine große Flexibilität aufweisen soll.

Die erfindungsgemäße Aufgabe wird durch den kennzeichnenden Teil des Patentanspruchs 1 gelöst. Diese hat den Vorteil, dass beim Ausfall der Energieversorgung im Kraftfahrzeug ein autarker Sperrmodul mit eigener Steuereinheit am Kraftfahrzeugschloss und ein durch einen Benutzter von außerhalb des Kraftfahrzeugs betätigbares Kraftübertragungsmittel zur Entriegelung des Kraftfahrzeugschlosses vorgesehen ist, was dazu führt, dass weniger Energieaufwand benötigt wird. Die Energie wird lediglich für den Authentifizierungsvorgang und für die Betätigung eines Sperrelements des Sperrmoduls verbraucht, wobei nur ein einziges Kraftfahrzeugschloss angesteuert wird, sodass das ganze Kraftfahrzeug selbst nicht aufgeweckt werden muss.

Sehr komfortabel und benutzerfreundlich ist die Konstruktion, wenn eine an dem Träger angeordnete Handhabe vorgesehen ist, durch welche die Kraftfahrzeugtür oder Klappe in dem entriegelten Zustand des Kraftfahrzeugschlosses öffenbar ist. Vorteilhafterweise kann das Gehäuse des Sperrmoduls mit einer durchgehenden Öffnung zum Zusammenwirken mit dem Betätigungsmittel versehen ist, wobei das Sperrelement eine Blockierstellung oder eine Freigabestellung zum Blockieren und/oder Freigeben des Betätigungsmittels aufweisen. Damit wird sichergestellt, dass das Betätigungsmittel durch das Sperrmodul blockiert oder freigegeben wird, wobei das bestehende Kraftfahrzeugschloss unwesentlich konstruktiv angepasst werden muss. Damit kann das Sperrmodul in einfacher Weise nachgerüstet werden.

Sehr kostengünstig und einfach ist die Konstruktion, wenn das Schlossgehäuse ein gehäuseseitiges Befestigungsmittel, insbesondere mindestens eine Befestigungsöffnung mit einem Gewinde, und das Sperrmodul ein sperrmodulseitiges Befestigungsmittel, insbesondere einen Flansch, aufweist.

Eine die Erfindung verbessernde Maßnahme sieht vor, dass das Sperrmodul mittels Laserschweißen oder mittels Klebeverbindung oder mittels Clipsverbindung am Schlossgehäuse befestigbar ist. Damit wird eine einfache Montage des Sperrmoduls erreicht.

Eine die Erfindung verbessernde Maßnahme sieht vor, dass die Steuereinheit mit der Authentifizierungseinrichtung zum Authentifizieren des berechtigten Benutzers innerhalb des Gehäuses des Sperrmoduls angeordnet ist. Damit wird sichergestellt, dass der auf der Steuereinheit gespeicherte Schließcode zur Authentifizierung des berechtigten Benutzers vor Zugriff Dritter von außen innerhalb der Kraftfahrzeugtür manipulationssicher gelagert ist.

Weiterhin kann gemäß der Erfindung vorgesehen sein, dass die Steuereinheit innerhalb des Gehäuses des Sperrmoduls und die Authentifizierungseinrichtung innerhalb der Handhabe zum Authentifizieren des berechtigten Benutzers angeordnet sind, wobei die Steuereinheit und die Authentifizierungseinrichtung über eine elektrische Leitung und/oder Signalleitung miteinander verbindbar sind. Durch die Verlagerung der Authentifizierungseinrichtung nach außen wird die Kommunikation mit einem mobilen Identifikationsgeber, insbesondere einem Smartphone verbessert, da es sich keine Metalteile wie z. B. ein Karosserieblech des Kraftfahrzeuges zwischen der Authentifizierungseinrichtung und dem mobilen Identifikationsgeber, insbesondere einem Smartphone, befinden.

Vorteilhafterweise kann im Gehäuse ein Stecker zum Anschließen der elektrischen Leitung und/oder Signalleitung vorgesehen sein. Dadurch wird der Vorteil erziel, dass das Kraftfahrzeugschloss mit dem Sperrmodul flexibel aufgrund von unterschiedlichen Bauräumen bzw. unterschiedlichen KFZ-Varianten in der Kraftfahrzeugtür verbaut werden kann, indem eine passende elektrische Leitung und/oder Signalleitung abhängig von der KFZ-Ausführung auswählbar ist.

Weiterhin kann gemäß der Erfindung vorgesehen sein, dass die Authentifizierungseinrichtung eine NFC-Kommunikationseinrichtung oder eine BLE-Kommunikationseinrichtung aufweist, wobei die NFC-Kommunikationseinrichtung zur externen Energieversorgung des Sperrantriebs und zum Authentifizieren eines berechtigten Benutzers vorgesehen ist. Durch den Einsatz der beiden Schnittstellen ist es möglich, dass ein Smartphone zum Authentifizieren des berechtigten Benutzers verwendet werden kann, da diese Schnittstellen mittlerweile standardmäßig im Smartphone verbaut sind. Einen besonderen Vorteil weist die NFC-Kommunikationseinrichtung auf, da diese in einem Bereich vom wenigen Zentimetern funktioniert, sodass die Sicherheit des Authentifizierungsvorgangs erheblich verbessert werden kann.

Ebenfalls ist es denkbar, dass innerhalb des Gehäuses des Sperrmoduls mindestens ein Energiespeicher zur Versorgung des Sperrantriebs angeordnet ist, wobei der Energiespeicher als ein Kondensator oder ein Akkumulator ausgebildet ist. Damit wird eine externe Energieversorgung entbehrlich, da während eines Normalbetriebs der Energiespeicher von der Fahrzeugbatterie aufgeladen werden kann, um Notfall den Sperrmodul mit der Energie zu versorgen.

Vorteilhafterweise kann das Kraftübertragungsmittel ein Abtriebselement zur Verbindung des Betätigungsmittels, und ein Notbetätigungselement mit einem auf einer Außenseite des Notbetätigungselements ausgebildeten Betätigungsabschnitt zum Betätigen durch den Benutzer, insbesondere in Form eines Schlitzes und/oder einer Rändelung, und eine Welle zur Verbindung des Notbetätigungselements und des Abtriebselementes umfassen. Durch die Rändelung wird eine komfortable Bedienung bereitgestellt, welche ohne zusätzliches Werkzeug auskommt. Durch die Ausbildung des Schlitzes kann z. B. eine Münze zur Betätigung des Notbetätigungselements verwendet werden. Es wird davon ausgegangen, dass eine Münze meistens beim Benutzer vorhanden ist.

In einer weiteren die Erfindung verbessernden Ausführungsform kann das Kraftübertragungsmittel eine USB-Schnittstelle zur Energieversorgung des Sperrmoduls aufweisen. Dadurch ist möglich von einer externen Vorrichtung wie eine Powerbank, Smartphone oder mobiler Identifikationsgeber die Energie von außerhalb eines Kraftfahrzeugs in das Kraftfahrzeug-Schließsystem zuzuführen. Es wird davon ausgegangen, dass es derzeit viele Geräte gibt, welche über eine standartmäßige USB-Schnittstelle verfügen. Durch die Verwendung der USB-Schnittstelle, insbesondere eine USB-Schnittstelle Typ C oder Typ B, wird schneller Energietransport ermöglicht und somit der Bedienungskomfort erheblich erhöht. Sehr kostengünstig und einfach ist die Konstruktion, wenn die Authentifizierung des berechtigten Benutzers mittels eines Smartphones, erfolgt. Dadurch wird der Vorrichtungsaufwand minimiert, da der mechanische Schlüssel und der mobile Identifikationsgeber entfallen können. Ferner wird der Komfort verbessert, da nur ein Identifikationsgerät, insbesondere ein Smartphone, vom Benutzer getragen wird. Es wird davon ausgegangen, dass derzeit fast jeder Benutzer ein Smartphone bei sich trägt.

Eine die Erfindung verbessernde Maßnahme sieht vor, dass das Abtriebselement mit dem Notbetätigungselement über einen Freilauf bis zu einem vorbestimmten Drehmoment drehfest verbindbar ist. Durch den Freilauf wird sichergestellt, dass kein gewaltsames Verdrehen des Notbetätigungselements stattfindet, wenn das Betätigungsmittel des Kraftfahrzeugschlosses durch den Sperrmodul blockiert ist.

Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1 eine perspektivische Darstellung eines Kraftfahrzeug-Schließsystems gemäß einer ersten Ausführungsform,
Figur 2 eine perspektivische Darstellung eines Kraftfahrzeug-Schließsystems gemäß einer zweiten Ausführungsform,
Figur 3 eine perspektivische Darstellung eines Kraftfahrzeug-Schließsystems gemäß einer dritten Ausführungsform,
Figur 4 eine Schnittdarstellung eines Kraftfahrzeugschlosses mit einem Sperrmodul in einer Freigabestellung,
Figur 5 eine Schnittdarstellung eines Kraftfahrzeugschlosses mit einem Sperrmodul in einer Blockierstellung,
Figur 6 eine perspektivische Explosionsdarstellung des Sperrmoduls,
Figur 7 eine Schnittdarstellung des Sperrmoduls mit verschraubter Steuereinheit,
Figur 8 eine Schnittdarstellung des Sperrmoduls mit heißgeprägter Steuereinheit,
Figur 9 eine Schnittdarstellung entlang des Sperrmoduls mit Schraubbefestigung am Schlossgehäuse,
Figur 10 eine Schnittdarstellung entlang des Sperrmoduls mit Schweißverbindung am Schlossgehäuse,
Figur 11 eine Schnittdarstellung entlang des Sperrmoduls mit Klebeverbindung am Schlossgehäuse,
Figur 12 eine perspektivische Darstellung eines Kraftübertragungsmittels,
Figur 13 eine Schnittdarstellung des Kraftübertragungsmittels mit einer Abdeckkappe,

In den nachfolgenden Figuren werden für die gleichen technischen Merkmale auch von unterschiedlichen Ausführungsbeispielen die identischen Bezugszeichen verwendet.

Die drei folgenden Ausführungsformen werden anhand der Energieversorgung eines Sperrmoduls 9 und einer Kommunikationsart des Sperrmoduls 9 mit einem mobilen Identifikationsgeber unterschieden.

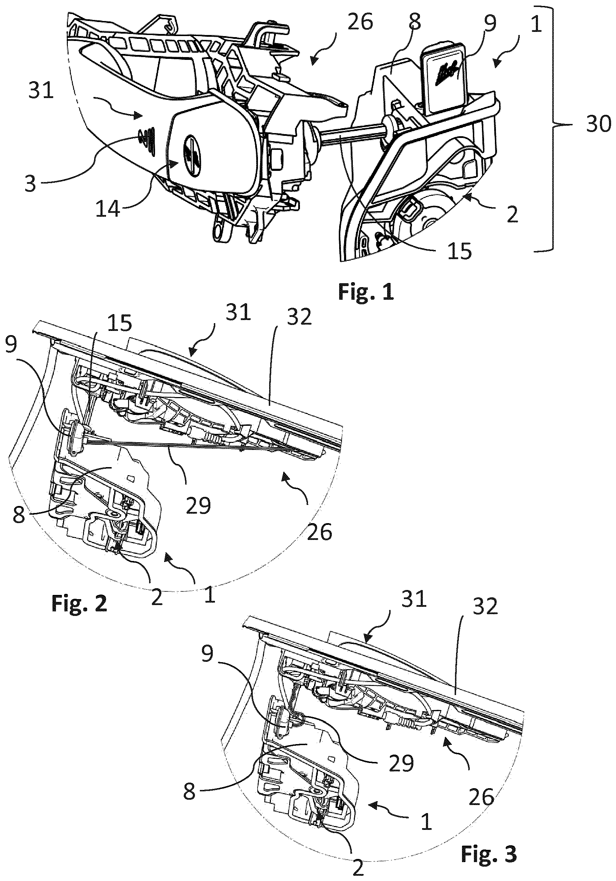

Figur 1 zeigt eine perspektivische Darstellung eines Kraftfahrzeug-Schließsystems 30 gemäß einer ersten Ausführungsform für eine hier nicht gezeigte Kraftfahrzeugtür oder Klappe 32. Die Kraftfahrzeugtür oder Klappe 32 ist in den Figuren 2 und 3 nur angedeutet gezeigt.

Das Kraftfahrzeug-Schließsystem 30 umfasst ein Kraftübertragungsmittel 14, welches von außerhalb der Kraftfahrzeugtür oder Klappe 32 für einen Benutzer zugänglich ist, wobei das Kraftübertragungsmittel 14 an einem zur Befestigung dienenden Träger 26 angeordnet ist, welcher innerhalb der Kraftfahrzeugtür oder Klappe 32 gelagert ist sowie ein Kraftfahrzeugschloss 1 zum Entriegeln und/oder Öffnen der Kraftfahrzeugtür oder Klappe 32 vorgesehen ist. Dazu weist das Kraftfahrzeugschloss 1 ein Gesperre 2 mit einem Antriebsmotor zu Betätigung des Gesperres 2 auf. Das Gesperre 2 umfasst eine verdrehbare Drehfalle, eine Sperrklinke zum Freigeben der Drehfalle, einen Verriegelungs -und/oder Entriegelungsmechanismus und einen Antriebsmotor zur Betätigung des Verriegelungsmechanismus auf. Der Antriebsmotor wird von einer Hauptsteuereinheit des Kraftfahrzeuges gesteuert. Der Antriebsmotor wird nur dann durch die Hauptsteuereinheit betätigt, wenn sich ein berechtigter Benutzer mit einem elektronischen Identifikationsgeber vorher authentifiziert hat. Ferner ist ein Schließriegel an einer Karosserieseite des Kraftfahrzeuges angeordnet, welcher mit der Drehfalle des Kraftfahrzeugschlosses 1 zusammenwirkt. Optional kann eine Handhabe 31 zum Öffnen der Kraftfahrzeugtür oder Klappe 32 vorgesehen sein. Die Kraftfahrzeugtür oder Klappe 32 ist mit Hilfe eines Kraftfahrzeug-Schließsystems 30 verschlossen und kann mittels einer als Griff ausgebildeten Handhabe 31 geöffnet werden. Genauer gesagt ist die Kraftfahrzeugtür oder Klappe 32 mittels eines des Kraftfahrzeugschlosses 1 verschlossen, so dass eine Betätigung der Handhabe 31 in einem Verriegelungszustand des Kraftfahrzeugschlosses 1 wirkungslos bleibt. Die als Griff ausgebildete Handhabe 31 ist an dem Träger 26 schwenkbar gelagert und von außen für einen Benutzer zum Öffnen der Kraftfahrzeugtür oder Klappe 32 betätigbar. Dieser Ablauf ist aus dem Stand der Technik bekannt, weshalb auf weitere Details nicht näher eingegangen wird, insbesondere da sich die Erfindung auch vielmehr auf einen Notbetrieb richtet.

Für den Notbetrieb ist erfindungsgemäß für die Zugangsberechtigungsprüfung und für die Entriegelung und/ oder für das Öffnen ein Kraftübertragungsmittel 14 mit einem am Kraftfahrzeugschloss 1 angeordneten Sperrmodul 9 vorgesehen. Das Kraftfahrzeugschloss 1 weist ein drehbar gelagertes Betätigungsmittel 7 auf. Das Betätigungsmittel 7 ist ebenfalls mit dem Verriegelungs -und/oder Entriegelungsmechanismus verbunden. Um das Kraftfahrzeugschloss 1 von außen zu entriegeln und/oder zu öffnen ist das Betätigungsmittel 7 ist mithilfe des Kraftübertragungsmittels 14 betätigbar. Dazu umfasst das Kraftübertragungsmittel 14 ein Abtriebselement 15 und ein Notbetätigungselement 16 mit einem auf einer Außenseite des Notbetätigungselements 16 ausgebildeten Betätigungsabschnitt 27 zum Betätigen durch den Benutzer, insbesondere in Form eines Schlitzes 18 und/oder einer Rändelung 28 , und eine Welle 20 zur Verbindung des Notbetätigungselements 16 und des Abtriebselementes 15. Die Welle 20 und das Abtriebselement 15 sind gelenkig und formschlüssig mit einander verbunden. Dadurch können unterschiedliche Einbausituationen des Kraftfahrzeugschlosses 1 abgedeckt werden. Optional kann eine Handhabe 31 zum Öffnen der Kraftfahrzeugtür oder Klappe 32 vorgesehen sein. Die Kraftfahrzeugtür oder Klappe 32 ist mit Hilfe eines Kraftfahrzeug-Schließsystems 30 verschlossen und kann mittels einer als Griff ausgebildeten Handhabe 31 geöffnet werden. Genauer gesagt ist die Kraftfahrzeugtür oder Klappe 32 mittels eines Verriegelungs -und/oder Entriegelungsmechanismus verriegelt, so dass eine Betätigung der Handhabe 31 in einem Verriegelungszustand des Kraftfahrzeugschlosses 1 wirkungslos bleibt. Die als Griff ausgebildete Handhabe 31 ist an dem Träger 26 schwenkbar gelagert und von außen für einen Benutzer zum Öffnen der Kraftfahrzeugtür oder Klappe 32 betätigbar, wobei der Träger 26 innenseitig an der Kraftfahrzeugtür oder Klappe 32 befestigt ist. In der Kraftfahrzeugtür oder Klappe 32 ist mindestens eine Öffnung zur Durchführung des Kraftübertragungsmittels 14 bzw. der Handhabe 31 ausgebildet, um das Kraftübertragungsmittels 14 bzw. die Handhabe 31 an dem Träger 26 zu befestigen.

Im Notfall erfolgt die Authentifizierung mittels einer separaten Steuereinheit 22, welche innerhalb des Sperrmoduls 9 angeordnet ist, wobei das Sperrmodul 9 am Gehäuse des Kraftfahrzeugschlosses 1 befestigt ist. Ferner weist die Steuereinheit 22 eine Authentifizierungseinrichtung zum Authentifizieren des berechtigten Benutzers auf.

Die Authentifizierungseinrichtung ist nur in Notfall aktiv und überprüft, ob ein berechtigter Benutzer Zugang zu dem Kraftfahrzeug erlangen möchte. Hierzu sendet ein Benutzer im Notfall ein Zugangssignal mittels beispielsweise eines Smartphones oder einer NFC-Karte an die Authentifizierungseinrichtung, welche das Zugangssignal an die Steuereinheit 22 weiterleitet. In der Steuereinheit 22 wird das Zugangssignal überprüft und auswertet, ob es sich um einen berechtigten Benutzer handelt. Dabei kann es sich bei der Authentifizierungseinrichtung um ein aktives oder passives Bauteil handeln, welches zu seinem Betrieb entweder selbst eine Energiequelle, wie zum Beispiel eine Knopfzelle, aufweist oder Energie von außerhalb beim und für den Authentifizierungsvorgang erhält. Stellt die Steuereinheit 22 einen berechtigten Benutzer fest, so setzt die Steuereinheit 22 einen im Sperrmodul 9 angeordneten Sperrantrieb 12 in Betrieb.

Die Authentifizierungseinrichtung weist eine NFC-Kommunikationseinrichtung oder eine BLE-Kommunikationseinrichtung auf, wobei die NFC-Kommunikationseinrichtung mit einer nicht näher dargestellte Antenne zur externen Energieversorgung des Sperrantriebs 12 und zum Authentifizieren eines berechtigten Benutzers vorgesehen ist. Die NFC-Kommunikationseinrichtung kann in einem Hohlraum der Handhabe 31 aufgenommen werden. Ferner weist die NFC-Kommunikationseinrichtung mit einem Power-Receiver auf, wobei der Power-Receiver der Not-Energiespeicher ist und in dem Notbetrieb und nach Authentifizierung eines berechtigten Benutzers den Not-Stellantrieb mit Energie versorgend ausgebildet ist. Der Power-Receiver kann auch alternativ mit dem Not-Energiespeicher verbunden sein und auf den Not-Energiespeicher die Energie, welche mit Hilfe von einer NFC-Schnittstelle über einen Smartphone auf den Power-Receiver übertragen wurde, übertragend ausgebildet sein. Ferner ist die NFC-Kommunikationseinrichtung mit einer elektrischen Leitung und/oder Signalleitung mit dem Sperrmodul verbunden. Optional kann das Kraftübertragungsmittel 14 eine USB-Schnittstelle 23 zur Energieversorgung des Sperrmoduls 9 aufweisen.

Wenn die BLE-Kommunikationseinrichtung verwendet wird, wird diese innerhalb des Sperrmoduls 9 angeordnet, wobei die Stromversorgung mittels eines innerhalb des Sperrmoduls 9 angeordneten Energiespeichers erfolgt. Dabei kann der Energiespeicher als ein Kondensator und/oder als ein Akkumulator ausgebildet sein. Die BLE-Kommunikationseinrichtung ist mittels einer elektrischen Leitung 29 zur Stromübertragung mit dem Kraftübertragungsmittel 14 verbunden. Das Kraftübertragungsmittel 14 weist eine USB-Schnittstelle 23 zur Energieversorgung des Sperrmoduls 9 auf.

Figur 2 zeigt eine perspektivische Darstellung eines Kraftfahrzeug-Schließsystems gemäß einer zweiten Ausführungsform. Das Kraftfahrzeug-Schließsystem 30 umfasst ein Kraftübertragungsmittel 14, welches von außerhalb der Kraftfahrzeugtür oder Klappe 32 für einen Benutzer zugänglich ist, wobei das Kraftübertragungsmittel 14 an einem zur Befestigung dienenden Träger 26 angeordnet ist, welcher innerhalb der Kraftfahrzeugtür oder Klappe 32 gelagert ist sowie ein Kraftfahrzeugschloss 1 zum Entriegeln und/oder Öffnen der Kraftfahrzeugtür oder Klappe 32 vorgesehen ist. Dazu weist das Kraftfahrzeugschloss 1 ein Gesperre 2 mit einem Antriebsmotor zu Betätigung des Gesperres 2 auf. Das Gesperre 2 umfasst auf eine verdrehbare Drehfalle, eine Sperrklinke zum Freigeben der Drehfalle, einen Verriegelungs - und/oder Entriegelungsmechanismus und einen Antriebsmotor zur Betätigung des Verriegelungsmechanismus auf. Der Antriebsmotor wird von einer Hauptsteuereinheit des Kraftfahrzeuges gesteuert. Der Antriebsmotor wird nur dann durch die Hauptsteuereinheit betätigt, wenn sich ein berechtigter Benutzer mit einem elektronischen Identifikationsgeber vorher authentifiziert hat. Ferner ist ein Schließriegel an einer Karosserieseite des Kraftfahrzeuges angeordnet, welcher mit der Drehfalle des Kraftfahrzeugschlosses 1 zusammenwirkt. Dieser Ablauf ist aus dem Stand der Technik bekannt, weshalb auf weitere Details nicht näher eingegangen wird, insbesondere da sich die Erfindung auch vielmehr auf einen Notbetrieb richtet.

Für den Notbetrieb ist erfindungsgemäß für die Zugangsberechtigungsprüfung und für die Entriegelung und/ oder für das Öffnen ein Kraftübertragungsmittel 14 mit einem am Kraftfahrzeugschloss 1 angeordneten Sperrmodul 9 vorgesehen. Das Kraftfahrzeugschloss 1 weist ein drehbar gelagertes Betätigungsmittel 7 auf. Das Betätigungsmittel 7 ist ebenfalls mit dem Verriegelungs -und/oder Entriegelungsmechanismus verbunden. Um das Kraftfahrzeugschloss 1 von außen zu entriegeln und/oder zu öffnen ist das Betätigungsmittel 7 ist mithilfe des Kraftübertragungsmittels 14 betätigbar. Dazu umfasst das Kraftübertragungsmittel 14 ein Abtriebselement 15 und ein Notbetätigungselement 16 mit einem auf einer Außenseite des Notbetätigungselements 16 ausgebildeten Betätigungsabschnitt 27 zum Betätigen durch den Benutzer, insbesondere in Form eines Schlitzes 18 und/oder einer Rändelung 28 , und eine Welle 20 zur Verbindung des Notbetätigungselements 16 und des Abtriebselementes 15. Die Welle 20 und das Abtriebselement 15 sind gelenkig und formschlüssig mit einander verbunden. Dadurch können unterschiedliche Einbausituationen des Kraftfahrzeugschlosses 1 abgedeckt werden. Optional kann eine Handhabe 31 zum Öffnen der Kraftfahrzeugtür oder Klappe 32 vorgesehen sein. Die Kraftfahrzeugtür oder Klappe 32 ist mit Hilfe eines Kraftfahrzeug-Schließsystems 30 verschlossen und kann mittels einer als Griff ausgebildeten Handhabe 31 geöffnet werden. Genauer gesagt ist die Kraftfahrzeugtür oder Klappe 32 mittels eines Verriegelungs -und/oder Entriegelungsmechanismus verriegelt, so dass eine Betätigung der Handhabe 31 in einem Verriegelungszustand des Kraftfahrzeugschlosses 1 wirkungslos bleibt. Die als Griff ausgebildete Handhabe 31 ist an dem Träger 26 schwenkbar gelagert und von außen für einen Benutzer zum Öffnen der Kraftfahrzeugtür oder Klappe 32 betätigbar, wobei der Träger 26 innenseitig an der Kraftfahrzeugtür oder Klappe 32 befestigt ist. In der Kraftfahrzeugtür oder Klappe 32 ist mindestens eine Öffnung zur Durchführung des Kraftübertragungsmittels 14 bzw. der Handhabe 31 ausgebildet, um das Kraftübertragungsmittels 14 bzw. die Handhabe 31 an dem Träger 26 zu befestigen.

Im Notfall erfolgt die Authentifizierung mittels einer separaten Steuereinheit 22, welche innerhalb des Sperrmoduls 9 angeordnet ist, wobei das Sperrmodul 9 am Gehäuse des Kraftfahrzeugschlosses 1 befestigt ist. Ferner weist die Steuereinheit 22 eine Authentifizierungseinrichtung zum Authentifizieren des berechtigten Benutzers auf.

Die Authentifizierungseinrichtung ist nur in Notfall aktiv und überprüft, ob ein berechtigter Benutzer Zugang zu dem Kraftfahrzeug erlangen möchte. Hierzu sendet ein Benutzer im Notfall ein Zugangssignal mittels beispielsweise eines Smartphones oder einer NFC-Karte an die Authentifizierungseinrichtung, welche das Zugangssignal an die Steuereinheit 22 weiterleitet. In der Steuereinheit 22 wird das Zugangssignal überprüft und auswertet, ob es sich um einen berechtigten Benutzer handelt. Dabei kann es sich bei der Authentifizierungseinrichtung um ein aktives oder passives Bauteil handeln, welches zu seinem Betrieb entweder selbst eine Energiequelle, wie zum Beispiel eine Knopfzelle, aufweist oder Energie von außerhalb beim und für den Authentifizierungsvorgang erhält. Stellt die Steuereinheit 22 einen berechtigten Benutzer fest, so setzt die Steuereinheit 22 einen im Sperrmodul 9 angeordneten Sperrantrieb 12 in Betrieb.

Die Authentifizierungseinrichtung weist eine NFC-Kommunikationseinrichtung zur Signalübertragung und zur Stromübertragung mit einer nicht näher dargestellte Antenne auf. Die NFC-Kommunikationseinrichtung kann in einem Hohlraum der Handhabe 31 aufgenommen werden. Ferner weist die NFC-Kommunikationseinrichtung mit einem Power-Receiver auf, wobei der Power-Receiver der Not-Energiespeicher ist und in dem Notbetrieb und nach Authentifizierung eines berechtigten Benutzers den Not-Stellantrieb mit Energie versorgend ausgebildet ist. Der Power-Receiver kann auch alternativ mit dem Not-Energiespeicher verbunden sein und auf den Not-Energiespeicher die Energie, welche mit Hilfe von einer NFC-Schnittstelle über einen Smartphone auf den Power-Receiver übertragen wurde, übertragend ausgebildet sein. Ferner ist die NFC-Kommunikationseinrichtung mit einer elektrischen Leitung und/oder Signalleitung mit dem Sperrmodul verbunden. Optional kann das Kraftübertragungsmittel 14 eine USB-Schnittstelle 23 zur Energieversorgung des Sperrmoduls 9 aufweisen.

Figur 3 zeigt eine perspektivische Darstellung eines Kraftfahrzeug-Schließsystems gemäß einer dritten Ausführungsform.

Das Kraftfahrzeug-Schließsystem 30 umfasst ein Kraftübertragungsmittel 14, welches von außerhalb der Kraftfahrzeugtür oder Klappe 32 für einen Benutzer zugänglich ist, wobei das Kraftübertragungsmittel 14 an einem zur Befestigung dienenden Träger 26 angeordnet ist, welcher innerhalb der Kraftfahrzeugtür oder Klappe 32 gelagert ist sowie ein Kraftfahrzeugschloss 1 zum Entriegeln und/oder Öffnen der Kraftfahrzeugtür oder Klappe 32 vorgesehen ist. Dazu weist das Kraftfahrzeugschloss 1 ein Gesperre 2 mit einem Antriebsmotor zu Betätigung des Gesperres 2 auf. Das Gesperre 2 umfasst auf eine verdrehbare Drehfalle, eine Sperrklinke zum Freigeben der Drehfalle, einen Verriegelungs -und/oder Entriegelungsmechanismus und einen Antriebsmotor zur Betätigung des Verriegelungsmechanismus auf. Der Antriebsmotor wird von einer Hauptsteuereinheit des Kraftfahrzeuges gesteuert. Der Antriebsmotor wird nur dann durch die Hauptsteuereinheit betätigt, wenn sich ein berechtigter Benutzer mit einem elektronischen Identifikationsgeber vorher authentifiziert hat. Ferner ist ein Schließriegel an einer Karosserieseite des Kraftfahrzeuges angeordnet, welcher mit der Drehfalle des Kraftfahrzeugschlosses 1 zusammenwirkt. Dieser Ablauf ist aus dem Stand der Technik bekannt, weshalb auf weitere Details nicht näher eingegangen wird, insbesondere da sich die Erfindung auch vielmehr auf einen Notbetrieb richtet.

Für den Notbetrieb ist erfindungsgemäß für die Zugangsberechtigungsprüfung und für die Entriegelung und/ oder für das Öffnen ein Kraftübertragungsmittel 14 mit einem am Kraftfahrzeugschloss 1 angeordneten Sperrmodul 9 vorgesehen. Das Kraftfahrzeugschloss 1 weist ein drehbar gelagertes Betätigungsmittel 7 auf. Das Betätigungsmittel 7 ist ebenfalls mit dem Verriegelungs -und/oder Entriegelungsmechanismus verbunden. Um das Kraftfahrzeugschloss 1 von außen zu entriegeln und/oder zu öffnen ist das Betätigungsmittel 7 mithilfe des Kraftübertragungsmittels 14 betätigbar. Dazu umfasst das Kraftübertragungsmittel 14 ein Abtriebselement 15 und ein Notbetätigungselement 16 mit einem auf einer Außenseite des Notbetätigungselements 16 ausgebildeten Betätigungsabschnitt 27 zum Betätigen durch den Benutzer, insbesondere in Form eines Schlitzes 18 und/oder einer Rändelung 28 , und eine Welle 20 zur Verbindung des Notbetätigungselements 16 und des Abtriebselementes 15. Die Welle 20 und das Abtriebselement 15 sind gelenkig und formschlüssig mit einander verbunden. Dadurch können unterschiedliche Einbausituationen des Kraftfahrzeugschlosses 1 abgedeckt werden. Optional kann eine Handhabe 31 zum Öffnen der Kraftfahrzeugtür oder Klappe 32 vorgesehen sein. Die Kraftfahrzeugtür oder Klappe 32 ist mit Hilfe eines Kraftfahrzeug-Schließsystems 30 verschlossen und kann mittels einer als Griff ausgebildeten Handhabe 31 geöffnet werden. Genauer gesagt ist die Kraftfahrzeugtür oder Klappe 32 mittels eines Verriegelungs -und/oder Entriegelungsmechanismus verriegelt, so dass eine Betätigung der Handhabe 31 in einem Verriegelungszustand des Kraftfahrzeugschlosses 1 wirkungslos bleibt. Die als Griff ausgebildete Handhabe 31 ist an dem Träger 26 schwenkbar gelagert und von außen für einen Benutzer zum Öffnen der Kraftfahrzeugtür oder Klappe 32 betätigbar, wobei der Träger 26 innenseitig an der Kraftfahrzeugtür oder Klappe 32 befestigt ist. In der Kraftfahrzeugtür oder Klappe 32 ist mindestens eine Öffnung zur Durchführung des Kraftübertragungsmittels 14 bzw. der Handhabe 31 ausgebildet, um das Kraftübertragungsmittels 14 bzw. die Handhabe 31 an dem Träger 26 zu befestigen.

Im Notfall erfolgt die Authentifizierung mittels einer separaten Steuereinheit 22, welche innerhalb des Sperrmoduls 9 angeordnet ist, wobei das Sperrmodul 9 am Gehäuse des Kraftfahrzeugschlosses 1 befestigt ist. Ferner weist die Steuereinheit 22 eine Authentifizierungseinrichtung zum Authentifizieren des berechtigten Benutzers auf.

Die Authentifizierungseinrichtung ist nur in Notfall aktiv und überprüft, ob ein berechtigter Benutzer Zugang zu dem Kraftfahrzeug erlangen möchte. Hierzu sendet ein Benutzer im Notfall ein Zugangssignal mittels beispielsweise eines Smartphones an die Authentifizierungseinrichtung, welche das Zugangssignal an die Steuereinheit 22 weiterleitet. In der Steuereinheit 22 wird das Zugangssignal überprüft und auswertet, ob es sich um einen berechtigten Benutzer handelt. Dabei kann es sich bei der Authentifizierungseinrichtung um ein aktives oder passives Bauteil handeln, welches zu seinem Betrieb entweder selbst eine Energiequelle, wie zum Beispiel eine Knopfzelle, aufweist oder Energie von außerhalb beim und für den Authentifizierungsvorgang erhält. Stellt die Steuereinheit 22 einen berechtigten Benutzer fest, so setzt die Steuereinheit 22 einen im Sperrmodul 9 angeordneten Sperrantrieb 12 in Betrieb.

Die Authentifizierungseinrichtung weist eine BLE-Kommunikationseinrichtung auf. Die BLE-Kommunikationseinrichtung wird innerhalb des Sperrmoduls 9 angeordnet, wobei die BLE-Kommunikationseinrichtung mittels einer elektrischen Leitung 29 zur Stromübertragung mit dem Kraftübertragungsmittel 14 verbunden ist. Das Kraftübertragungsmittel 14 weist eine USB-Schnittstelle 23 zur Energieversorgung des Sperrmoduls 9 auf.

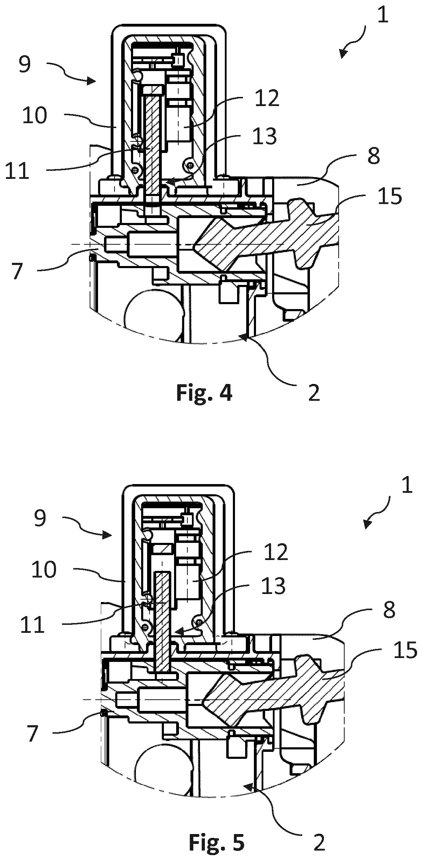

Figur 4 zeigt eine Schnittdarstellung des Kraftfahrzeugschlosses mit dem Sperrmodul in einer Freigabestellung. Das Sperrelement 11 kann in eine Blockierstellung oder in eine Freigabestellung zum Blockieren und/oder Freigeben des drehbar gelagerten Betätigungsmittels 7, insbesondere einer Schlossnuss, einnehmen Das Abtriebselement 15 des Kraftübertragungselements ist derart in das Betätigungsmittel, insbesondere die Schlossnuss, des Kraftfahrzeugschlosses eingesteckt, das ein Formschluss zwischen den beiden Bauteilen gebildet wird. In der Freigabestellung ist das Sperrelement 11 eingefahren. Infolgedessen ist eine Wirkverbindung zwischen dem Kraftübertragungsmittels 14 und dem Verriegelungs -und/oder Entriegelungsmechanismus hergestellt.

Figur 5 zeigt eine Schnittdarstellung eines Kraftfahrzeugschlosses mit einem Sperrmodul in einer Blockierstellung. In der Blockierstellung ist das Sperrelement 11 derart ausgefahren, dass das drehbar gelagerten Betätigungsmittels 7, insbesondere eine Schlossnuss, in seiner Bewegung blockierbar ist. Infolgedessen ist eine Wirkverbindung zwischen dem Kraftübertragungsmittels 14 und dem Verriegelungs -und/oder Entriegelungsmechanismus blockiert.

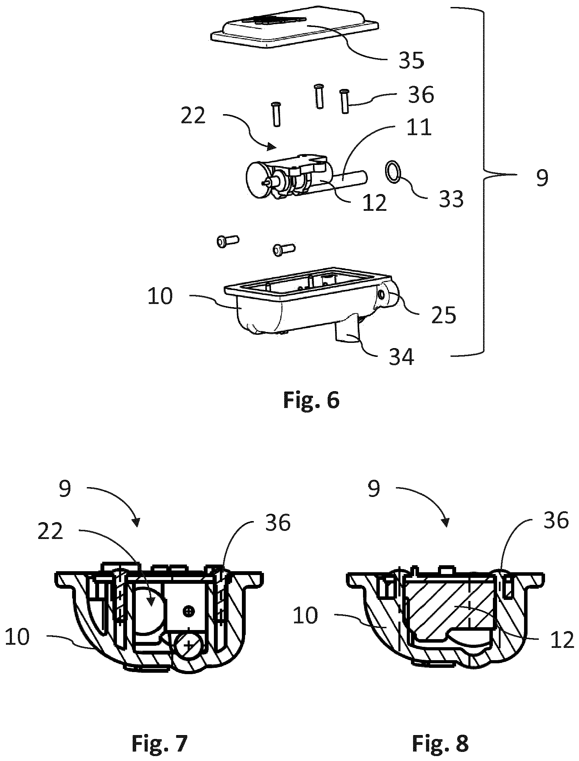

Figur 6 zeigt eine perspektivische Explosionsdarstellung des Sperrmoduls. Das Sperrmodul 9 umfasst ein Gehäuse 10 aus Kunststoff, in welchem ein Sperrelement 11 zum Blockieren und/oder Freigeben des Betätigungsmittels 7 und ein Sperrantrieb 12 zum Antreiben des Sperrelements 11 angeordnet sind, wobei dem Sperrmodul 9 eine Steuereinheit 22 mit einer Authentifizierungseinrichtung zum Authentifizieren eines berechtigten Benutzers zugeordnet ist, wobei nach dem Authentifizierungsvorgang das Sperrelement 11 ansteuerbar ist, sodass das Kraftfahrzeugschloss 1 mittels des Kraftübertragungsmittels 14 entriegelbar ist.

Die Steuereinheit 22 und der Sperrantrieb 12 mit dem Sperrelement 11 sind an einer Leiterplatte befestigt, welche wiederrum mittels einer Schraubverbindung oder einer Heißprägeverbindung am Gehäuse 10 verbunden. Die beiden Verbindungsarten sind in Figuren 7 und 8 gezeigt. Ferner kann das Gehäuse 10 mit einem Deckel 35 versehen sein, welcher stoffschlüssig mit dem Gehäuse 10 verbunden ist. Insbesondre kann der Deckel 35 am Gehäuse 10 lasergeschweißt sein. Im Gehäuse 10 des Sperrmoduls 9 ist eine durchgehende Öffnung 13 zum Zusammenwirken mit dem Betätigungsmittel 7, insbesondere einer Schlossnuss, vorgesehen. Um die innerhalb des Gehäuses 10 aufgenommen Bauteile vor Feuchtigkeit zu schützen, ist die Öffnung 13 mit einer Dichtung 33 versehen. Das Gehäuse 10 kann einen Stecker 34 zum Anschließen einer elektrischen Leitung und/oder Signalleitung 29 aufweisen. Innerhalb des Gehäuses 10 des Sperrmoduls 9 kann mindestens ein Energiespeicher zur Versorgung des Sperrantriebs 12 angeordnet sein, wobei der Energiespeicher als Kondensator und/oder als Akkumulator ausgebildet ist.

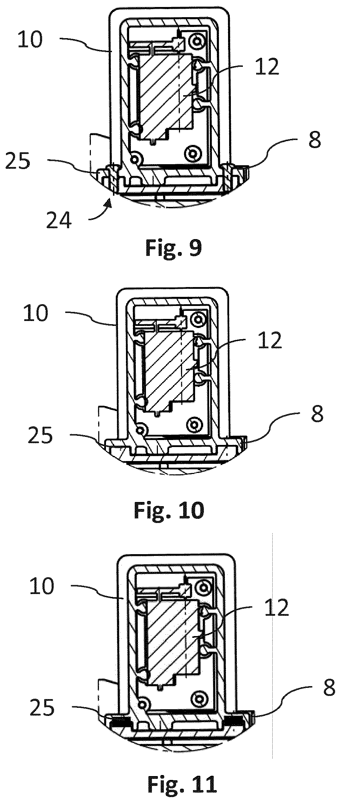

Figur 9 zeigt eine Schnittdarstellung entlang des Sperrmoduls mit Schraubbefestigung 25 am Schlossgehäuse. Ferner kann das Sperrmodul 9 ein sperrmodulseitiges Befestigungsmittel 25 zur Befestigung am Kraftfahrzeugschloss 1, insbesondere einen Flansch, aufweisen. Am Schlossgehäuse 8 ist ein gehäuseseitiges Befestigungsmittel 24 in Form von Gewindebohrungen ausgebildet.

Figur 10 zeigt eine Schnittdarstellung entlang des Sperrmoduls mit Schweißverbindung am Schlossgehäuse. Ferner kann das Sperrmodul 9 ein sperrmodulseitiges Befestigungsmittel 25 zur Befestigung am Kraftfahrzeugschloss 1, insbesondere einen Flansch, aufweisen. Das Schlossgehäuse 8 ist aus Kunststoff ausgebildet. Das Gehäuse 10 und das Schlossgehäuse 8 sind lasergeschweißt.

Figur 11 zeigt eine Schnittdarstellung entlang des Sperrmoduls mit Klebeverbindung am Schlossgehäuse. Ferner kann das Sperrmodul 9 ein sperrmodulseitiges Befestigungsmittel 25 zur Befestigung am Kraftfahrzeugschloss 1, insbesondere einen Flansch, aufweisen. Das Schlossgehäuse 8 ist aus Kunststoff ausgebildet. Das Gehäuse 10 und das Schlossgehäuse 8 sind geklebt.

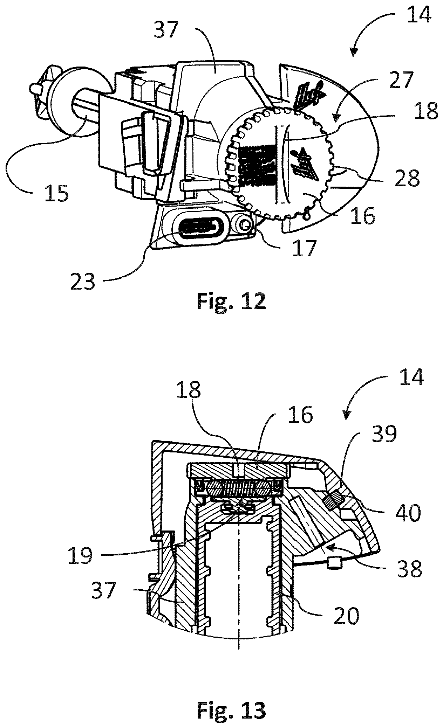

Figur 12 zeigt eine perspektivische Darstellung eines Kraftübertragungsmittels. das Kraftübertragungsmittel 14 umfassend:
ein Abtriebselement 15 zur Verbindung mit dem Betätigungsmittel 7, und ein Notbetätigungselement 16 mit einem auf einer Außenseite des Notbetätigungselements 16 ausgebildeten Betätigungsabschnitt 27 zum Betätigen durch den Benutzer, insbesondere in Form eines Schlitzes 18 und/oder einer Rändelung 28, und eine Welle 20 zur Verbindung des Notbetätigungselements 16 und des Abtriebselementes 15.

Ferner ist die Welle 20 in einem Kraftübertragungsmittel-Gehäuse 37 drehbar gelagert. Ein zum Kraftfahrzeugschloss weisendes Ende der Welle 20 der ist drehfest und gelenkig mit dem Abtriebselement 15 verbunden und ein gegenüberliegendes Ende weist das Notbetätigungselement 16 auf. Das Notbetätigungselement 16 ist wiederrum drehbar in der Welle gelagert, wobei die Welle 20 und das Notbetätigungselement 16 mittels eines Freilaufs mit einander verbunden. Der Freilauf ist in Figur 13 gezeigt. Beim Überschreiten eines vorgegebenen Drehmoments löst sich die Verbindung zwischen der Welle 20 und dem Notbetätigungselement 16. Dazu sind im Notbetätigungselement zwei federgespannte Kugeln angeordnet, welche in die für die Kugeln ausbildeten Ausnehmungen der Welle 20 gedrückt werden, wie federgelagerten Kugeln sind einer durchgehenden Querbohrung des Notbetätigungselements zwangsgeführt. Um das Sperrmodul mit Energie zu versorgen, kann das Kraftübertragungsmittel 14 eine USB-Schnittstelle 23 aufweisen. Zur Erkennung, ob das Sperrmodul betriebsbereit ist, kann eine Statusanzeige in Form von LED vorgesehen sein.

Figur 13 zeigt eine Schnittdarstellung des Kraftübertragungsmittels 14 mit einer Abdeckkappe. Die Abdeckkappe 39 kann mittels eines Magnets 40 befestigt werden, wobei der Magnet 40 am Kraftübertragungsmittel-Gehäuse 37 und/oder der Abdeckkappe 39 angeordnet sein kann. Ferner weist das Kraftübertragungsmittel 14 einen Befestigungsabschnitt 38 zur Befestigung an dem Träger 26 auf. Der Befestigungsabschnitt kann in Form von einer Gewindebohrung zur Verschraubung mit dem Träger 26 ausgebildet sein.

Die vorstehend beschriebene Erfindung ist selbstverständlich nicht auf die beschriebenen und dargestellten Ausführungsformen beschränkt. Es ist ersichtlich, dass an den in der Figur dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Der Rahmen der Erfindung wird nur durch die Ansprüche definiert.

### Bezugszeichenliste

- 1: Kraftfahrzeugschloss
- 2: Gesperre
- 7: Betätigungsmittel
- 8: Schlossgehäuse
- 9: Sperrmodul
- 10: Gehäuse
- 11: Sperrelement
- 12: Sperrantrieb
- 13: Öffnung
- 14: Kraftübertragungsmittel
- 15: Abtriebselement
- 16: Notbetätigungselement
- 17: Statusanzeige
- 18: Schlitz
- 19: Freilauf
- 20: Welle
- 22: Steuereinheit
- 23: USB-Schnittstelle
- 24: gehäuseseitiges Befestigungsmittel
- 25: sperrmodulseitiges Befestigungsmittel
- 26: Träger
- 27: Betätigungsabschnitt
- 28: Rändelung
- 29: elektrische Leitung und/oder Signalleitung
- 30: Kraftfahrzeug-Schließsystem
- 31: Handhabe
- 32: Kraftfahrzeugtür oder Klappe
- 33: Dichtung
- 34: Stecker
- 35: Deckel
- 36: Schraubverbindung / Heißprägeverbindung
- 37: Kraftübertragungsmittel-Gehäuse
- 38: Befestigungsabschnitt
- 39: Abdeckkappe
- 40: Magnet

## Patentansprüche

1. Kraftfahrzeug-Schließsystem (30) für eine Kraftfahrzeugtür oder Klappe (32) aufweisend:
- einen an der Kraftfahrzeugtür oder Klappe (32) angeordneten Träger (26), und
- ein an dem Träger (26) angeordnetes Kraftübertragungsmittel (14), und
- ein Kraftfahrzeugschloss (1) zur Anordnung innerhalb der Kraftfahrzeugtür oder Klappe (32), aufweisend ein Gesperre (2) und ein Verriegelungs - und/oder Entriegelungsmechanismus, einen zum Betrieb des Gesperres (2) ausgebildeten elektrischen Antriebsmotor, ein Betätigungsmittel (7) zum mechanischen Betrieb des Gesperres (2), insbesondere des Verriegelungs-/oder Entriegelungsmechanismus, wenn kein Strom zum Betreiben des elektrischen Antriebsmotors vorhanden ist, ein Schlossgehäuse (8), in welchem das Gesperre (2), das mechanische Betätigungsmittel (7) und der elektrische Antriebsmotor angeordnet sind, wobei das Karaftfahrzeug-Schließsystem weiterhin ein Sperrmodul (9) umfasst, in welchem ein Sperrelement (11) zum Blockieren und/oder Freigeben des Betätigungsmittels (7) und ein Sperrantrieb (12) zum Antreiben des Sperrelements (11) angeordnet sind, **dadurch gekennzeichnet, dass** das Sperrmodul (9) am Schlossgehäuse (8) angeordnet ist und ein Gehäuse (10) aufweist, wobei dem Sperrmodul (9) eine eigene Steuereinheit (22) mit einer Authentifizierungseinrichtung zum Authentifizieren eines berechtigten Benutzers zugeordnet ist, wobei nach dem Authentifizierungsvorgang das Sperrelement (11) ansteuerbar ist, sodass das Kraftfahrzeugschloss (1) mittels des Kraftübertragungsmittels (14) entriegelbar ist.

2. Kraftfahrzeug-Schließsystem (30) nach Anspruch 1, **dadurch gekennzeichnet, dass** an dem Träger (26) eine Handhabe (31) angeordnet ist, durch welche die Kraftfahrzeugtür oder Klappe (32) in dem entriegelten Zustand des Kraftfahrzeugschlosses (1) öffenbar ist.

3. Kraftfahrzeug-Schließsystem (30) nach Anspruch 1 oder 2, **dadurch gekennzeichnet, dass** das Gehäuse (10) des Sperrmoduls (9) mit einer durchgehenden Öffnung (13) zum Zusammenwirken mit dem Betätigungsmittel (7) versehen ist, wobei das Sperrelement (11) eine Blockierstellung oder eine Freigabestellung zum Blockieren und/oder Freigeben des Betätigungsmittels (7) aufweist.

4. Kraftfahrzeug-Schließsystem (30) nach einem der vorhergehenden Ansprüche, **dadurch gekennzeichnet, dass** das Schlossgehäuse (8) ein gehäuseseitiges Befestigungsmittel (24), insbesondere mindestens eine Befestigungsöffnung mit einem Gewinde, und das Sperrmodul (9) ein sperrmodulseitiges Befestigungsmittel (25), insbesondere einen Flansch, aufweist.

5. Kraftfahrzeug-Schließsystem (30) nach einem der vorhergehenden Ansprüche, **dadurch gekennzeichnet, dass** das Sperrmodul (9) mittels Laserschweißen oder mittels Klebeverbindung oder mittels Clipsverbindung am Schlossgehäuse (8) befestigbar ist.

6. Kraftfahrzeug-Schließsystem (30) nach einem der vorhergehenden Ansprüche, **dadurch gekennzeichnet, dass** die Steuereinheit (22) mit der Authentifizierungseinrichtung zum Authentifizieren des berechtigten Benutzers innerhalb des Gehäuses (10) des Sperrmoduls (9) angeordnet ist.

7. Kraftfahrzeug-Schließsystem (30) nach einem der vorhergehenden Ansprüche, **dadurch gekennzeichnet, dass** die Steuereinheit (22) innerhalb des Gehäuses (10) des Sperrmoduls (9) und die Authentifizierungseinrichtung innerhalb der Handhabe (31) zum Authentifizieren des berechtigten Benutzers angeordnet sind, wobei die Steuereinheit (22) und die Authentifizierungseinrichtung über eine elektrische Leitung und/oder Signalleitung (29) miteinander verbindbar sind.

8. Kraftfahrzeug-Schließsystem (30) nach einem der vorhergehenden Ansprüche, **dadurch gekennzeichnet, dass** im Gehäuse (10) ein Stecker (34) zum Anschließen der elektrischen Leitung und/oder Signalleitung (29) vorgesehen ist.

9. Kraftfahrzeug-Schließsystem (30) nach einem der vorhergehenden Ansprüche, **dadurch gekennzeichnet, dass** die Authentifizierungseinrichtung eine NFC-Kommunikationseinrichtung oder eine BLE-Kommunikationseinrichtung aufweist, wobei die NFC-Kommunikationseinrichtung zur externen Energieversorgung des Sperrantriebs (12) und zum Authentifizieren eines berechtigten Benutzers vorgesehen ist.

10. Kraftfahrzeug-Schließsystem (30) nach einem der vorhergehenden Ansprüche, **dadurch gekennzeichnet, dass** innerhalb des Gehäuses (10) des Sperrmoduls (9) mindestens ein Energiespeicher zur Versorgung des Sperrantriebs (12) angeordnet ist, wobei der Energiespeicher als ein Kondensator und/oder als ein Akkumulator ausgebildet ist.

11. Kraftfahrzeug-Schließsystem (30) nach einem der vorhergehenden Ansprüche, **dadurch gekennzeichnet, dass** das Kraftübertragungsmittel (14) umfassend:
ein Abtriebselement (15) zur Verbindung mit dem Betätigungsmittel (7), und
ein Notbetätigungselement (16) mit einem auf einer Außenseite des Notbetätigungselements (16) ausgebildeten Betätigungsabschnitt (27) zum Betätigen durch den Benutzer, insbesondere in Form eines Schlitzes (18) und/oder einer Rändelung (28), und
eine Welle (20) zur Verbindung des Notbetätigungselements (16) und des Abtriebselementes (15).

12. Kraftfahrzeug-Schließsystem (30) nach einem der vorhergehenden Ansprüche, **dadurch gekennzeichnet, dass** das Kraftübertragungsmittel (14) eine USB-Schnittstelle (23) zur Energieversorgung des Sperrmoduls (9) aufweist.

13. Kraftfahrzeug-Schließsystem (30) nach einem der vorhergehenden Ansprüche, **dadurch gekennzeichnet, dass** die Authentifizierung des berechtigten Benutzers mittels eines mobilen Identifikationsgebers, insbesondere eines Smartphones, erfolgt

14. Kraftfahrzeug-Schließsystem (30) nach Anspruch 11, **dadurch gekennzeichnet, dass** das Abtriebselement (15) mit dem Notbetätigungselement (16) über einen Freilauf (19) bis zu einem vorbestimmten Drehmoment drehfest verbindbar ist.

## Claims

1. A motor vehicle locking system (30) for a motor vehicle door or flap (32), having:
- a carrier (26) arranged on the motor vehicle door or flap (32), and
- a power transmission means (14) arranged on the carrier (26), and
- a motor vehicle lock (1) for arrangement inside the motor vehicle door or flap (32), comprising a locking pawl (2) and a locking and/or unlocking mechanism, an electric drive motor designed to operate the locking pawl (2), an actuating means (7) for mechanically operating the locking pawl (2), in particular the locking and/or unlocking mechanism if no current is present for operating the electric drive motor, a lock housing (8) in which the locking pawl (2), the mechanical actuating means (7) and the electric drive motor are located, wherein the motor vehicle locking system further comprises a blocking module (9), in which a blocking element (11) for blocking and/or releasing the actuating means (7), and a blocking drive (12) for driving the blocking element (11) are located, **characterized in that** the blocking module (9) is arranged on the lock housing (8) and includes a housing (10), wherein a dedicated control unit (22) having an authentication device for authenticating an authorised user is assigned to the blocking module (9), wherein the blocking element (11) can be activated after the process of authenticating the authorised user so that the motor vehicle lock (1) can be unlocked by the force-transmission means (14) .

2. The motor vehicle locking system (30) according to Claim 1, **characterized in that** a handle (31) is arranged on the carrier (26), by means of which the motor vehicle door or flap (32) can be opened when the motor vehicle lock (1) is in the unlocked state.

3. The motor vehicle locking system (30) according to Claim 1 or 2, **characterized in that** the housing (10) of the blocking module (9) is furnished with a through opening (13) for cooperation with the actuating means (7), wherein the blocking element (11) has a blocking position or a release position for blocking and/or releasing the actuating means (7) .

4. The motor vehicle locking system (30) according to any one of the preceding claims, **characterized in that** the lock housing (8) has a fastening means (24) on the housing side, in particular at least one fastening opening with a thread, and the blocking module (9) has a fastening means (25) on the blocking module side, in particular a flange.

5. The motor vehicle locking system (30) according to any one of the preceding claims, **characterized in that** the blocking module (9) can be fastened to the lock housing (8) by means of laser welding or by means of an adhesive connection or by means of a clip connection.

6. The motor vehicle locking system (30) according to any one of the preceding claims, **characterized in that** the control unit (22) with the authentication device for authenticating the authorised user is arranged inside the housing (10) of the blocking module (9) .

7. The motor vehicle locking system (30) according to any one of the preceding claims, **characterized in that** the control unit (22) is arranged inside the housing (10) of the blocking module (9), and the authentication device is arranged inside the handle (31) for authenticating the authorised user, wherein the control unit (22) and the authentication device can be connected to one another via an electrical line and/or signal line (29) .

8. The motor vehicle locking system (30) according to any one of the preceding claims, **characterized in that** a plug (34) for connecting the electrical line and/or signal line (29) is provided in the housing (10) .

9. The motor vehicle locking system (30) according to any one of the preceding claims, **characterized in that** the authentication device includes an NFC communication device or a BLE Communication device, wherein the NFC communication device is provided for the external energy supply of the blocking drive (12) and for authenticating an authorised user.

10. The motor vehicle locking system (30) according to any one of the preceding claims, **characterized in that** at least one energy storage device for supplying the blocking drive (12) is arranged inside the housing (10) of the blocking module (9), wherein the energy storage device is designed as a capacitor and/or as an accumulator.

11. The motor vehicle locking system (30) according to any one of the preceding claims, **characterized in that** the power transmission means (14) comprises:
an output element (15) for connecting to the actuating means (7), and an emergency actuating element (16) with an actuating section (27) constructed on the outside of the outside of the emergency actuating element (16) for actuation by the user, in particular in the form of a slot (18) and/or knurling (28), and
a shaft (20) for connecting the emergency actuating element (16) and the output element (15).

12. The motor vehicle locking system (30) according to any one of the preceding claims, **characterized in that** the power transmission means (14) has a USB interface (23) for supplying energy to the blocking module (9).

13. The motor vehicle locking system (30) according to any one of the preceding claims, **characterized in that** the authorised user is authenticated by means of a mobile identification transmitter, in particular a smartphone.

14. The motor vehicle locking system (30) according to Claim 11, **characterized in that** the output element (15) can be connected in a rotationally fixed manner to the emergency actuating element (16) via a freewheel (19) up to a predetermined torque.

## Revendications

1. Système de fermeture de véhicule automobile (30) pour une porte de véhicule automobile ou un hayon (32) comportant :
- un support (26) disposé sur la porte du véhicule automobile ou sur le hayon (32), et
- un moyen de transmission de force (14) disposé sur le support (26), et
- une serrure de véhicule automobile (1) pour mise en place à l'intérieur de la porte de véhicule automobile ou du hayon (32), comportant un mécanisme d'encliquetage (2) et un mécanisme de verrouillage et/ou de déverrouillage, un moteur d'entraînement électrique constitué pour faire fonctionner le mécanisme d'encliquetage (2), un moyen d'actionnement (7) pour le fonctionnement mécanique du mécanisme d'encliquetage (2), en particulier du mécanisme de verrouillage et/ou de déverrouillage, lorsqu'aucun courant n'est présent pour faire fonctionner le moteur d'entraînement électrique, un boîtier de serrure (8) dans lequel sont disposés le mécanisme d'encliquetage (2), le moyen d'actionnement mécanique (7) et le moteur d'entraînement électrique, sachant que le système de fermeture de véhicule automobile comprend en plus un module de blocage (9) dans lequel sont disposés un élément de blocage (11) pour bloquer et/ou libérer le moyen d'actionnement (7) et un entraînement de blocage (12) pour entraîner l'élément de blocage (11), **caractérisé en ce que** le module de blocage (9) est disposé sur le boîtier de serrure (8) et comporte un boîtier (10), sachant qu'une unité de commande propre (22) est attribuée au module de blocage (9) avec un système d'authentification pour authentifier un utilisateur autorisé, sachant qu'après le processus d'authentification, l'élément de blocage (11) peut être activé de telle manière que la serrure de véhicule automobile (1) peut être déverrouillée au moyen du moyen de transmission de force (14).

2. Système de fermeture de véhicule automobile (30) selon la revendication 1, **caractérisé en ce qu**'une manette (31) est disposée sur le support (26) par laquelle la porte de véhicule automobile ou le hayon (32) peut être ouvert(e) à l'état déverrouillé de la serrure de véhicule automobile (1).

3. Système de fermeture de véhicule automobile (30) selon la revendication 1 ou 2, c**aractérisé en ce que** le boîtier (10) du module de blocage (9) est doté d'une ouverture complète (13) pour coopérer avec le moyen d'actionnement (7), sachant que l'élément de blocage (11) comporte une position de blocage ou une position de libération pour bloquer et/ou libérer le moyen d'actionnement (7).

4. Système de fermeture de véhicule automobile (30) selon l'une quelconque des revendications précédentes, **caractérisé en ce que** le boîtier de serrure (8) comporte un moyen de fixation (24) du côté boîtier, en particulier au moins une ouverture de fixation avec un filetage et le module de blocage (9) comporte un moyen de fixation (25) du côté module de blocage, en particulier une bride.

5. Système de fermeture de véhicule automobile (30) selon l'une quelconque des revendications précédentes, **caractérisé en ce que** le module de blocage (9) peut être fixé sur le boîtier de serrure (8) au moyen d'une soudure au laser ou au moyen d'une liaison par collage ou au moyen d'une liaison clipsée.

6. Système de fermeture de véhicule automobile (30) selon l'une quelconque des revendications précédentes, **caractérisé en ce que** l'unité de commande (22) avec le système d'authentification pour authentifier l'utilisateur autorisé est disposée à l'intérieur du boîtier (10) du module de blocage (9).

7. Système de fermeture de véhicule automobile (30) selon l'une quelconque des revendications précédentes, **caractérisée en ce que** l'unité de commande (22) est disposée à l'intérieur du boîtier (10) du module de blocage (9) et le système d'authentification est disposé à l'intérieur de la manette (31) pour authentifier l'utilisateur autorisé, sachant que l'unité de commande (22) et le système d'authentification peuvent être reliés entre eux par un câble électrique et/ou un câble de signalisation (29).

8. Système de fermeture de véhicule automobile (30) selon l'une quelconque des revendications précédentes, **caractérisé en ce qu**'un connecteur (34) est prévu dans le boîtier (10) pour connecter le câble électrique et/ou le câble de signalisation (29) .

9. Système de fermeture de véhicule automobile (30) selon l'une quelconque des revendications précédentes, **caractérisé en ce que** le système d'authentification comporte un dispositif de communication en champ proche (NFC) ou un dispositif de communication Bluetooth à faible consommation (BLE), sachant que le dispositif de communication en champ proche (NFC) est prévu pour une alimentation en énergie externe de l'entraînement de blocage (12) et pour l'authentification d'un utilisateur autorisé.

10. Système de fermeture de véhicule automobile (30) selon l'une quelconque des revendications précédentes, **caractérisé en ce qu**'à l'intérieur du boîtier (10) du module de blocage (9) est disposé au moins un accumulateur d'énergie pour alimenter l'entraînement de blocage (12), sachant que l' accumulateur d'énergie est constitué sous la forme d'un condensateur et/ou d'un accumulateur.

11. Système de fermeture de véhicule automobile (30) selon l'une quelconque des revendications précédentes, **caractérisé en ce que** le moyen de transmission de force (14) comprend :
un élément d'entraînement (15) pour la liaison avec le moyen d'actionnement (7), et
un élément d'actionnement de secours (16) avec une section d'actionnement (27) constituée sur un côté extérieur de l'élément d'actionnement de secours (16) pour actionnement par l'utilisateur, en particulier en forme de fente (18) et/ou d'un moletage (28), et
un arbre (20) pour la liaison de l'élément d'actionnement de secours (16) et de l'élément d'entraînement (15).

12. Système de fermeture de véhicule automobile (30) selon l'une quelconque des revendications précédentes, **caractérisé en ce que** le moyen de transmission de force (14) comporte une interface USB (23) pour l'alimentation en énergie du module de blocage (9).

13. Système de fermeture de véhicule automobile (30) selon l'une quelconque des revendications précédentes, **caractérisé en ce que** l'authentification de l'utilisateur autorisé a lieu au moyen d'un indicateur d'identification mobile, en particulier d'un téléphone multifonctions.

14. Système de fermeture de véhicule automobile (30) selon la revendication 11, **caractérisé en ce que** l'élément d'entraînement (15) peut être relié de façon solidaire en rotation jusqu'à un couple prédéterminé à l'élément d'actionnement de secours (16) par le biais d'un système à roue libre (19).
